# EUROPEAN PATENT SPECIFICATION

(11) **EP 1 714 780 B1**
(45) Date of publication and mention of the grant of the patent: **12.11.2008**
(21) Application number: 06252172.9
(22) Date of filing: 21.04.2006
(51) Int. Cl.: B32B 27/32, E04C 2/00

(54) **A laminate structure for use in insulating boards**
Laminatstruktur zur Verwendung in Dämmplatten
Structure stratifiée pour panneau isolant

(30) Priority: 22.04.2005 GB 0508197
(43) Date of publication of application: 25.10.2006
(73) Proprietor: Celotex Limited, Ipswich, IP7 6BA (GB)
(72) Inventor: Dakin, Rod c/o Celotex Limited, Ipswich IP7 6BA (GB)
(74) Representative: Setna, Rohan P.

(56) References cited:
- EP-A- 0 774 345
- EP-A- 0 783 018
- DE-A1- 3 502 056
- DE-A1- 3 510 018

## Description

The present invention relates to a laminate structure and in particular an insulation board.

Rigid, thermally insulating boards or panels, as used in the construction industry, are typically made from closed cell insulating materials such as polyurethane, polyisocyanurate, polystyrene or phenolic foams. Alternatively, non-foam insulating materials such as mineral wool can be used. In most cases the foam boards will be faced with a flexible sheet material such as paper, metal, plastics, glass fibre and various laminated or coated combinations.

This is particularly true of the 'wet' lay down processes used to make polyurethane, polyiso-cyanurate and phenolic foams where the facings act as carriers for the liquid chemical mixture which then reacts, expands and cures to form the rigid board. In these largely continuous processes, the facings are normally auto-adhesively bonded to the foam during the reaction/curing stages. To facilitate this process, the facing may be coated with a thin organic priming layer on the surface adjacent to the foam that forms a strong chemical bond with the polymeric structure of the foam. Equally the priming layer should form a strong chemical bond with the facing itself.

Alternatively and particularly where the facing consists of a multi-layer lamination or multi-coatings, the layer adjacent to the foam may auto-adhesively bond to the foam system by chemical, physical or mechanical means, using, for instance polyethylene, possibly in combination with glass fibre tissue.

Where foam board is produced unfaced, by other processes (extrusion, moulding, and cutting of blocks), facings may be post-bonded using a suitable adhesive. This latter approach is also relevant for non-foam insulating materials such as mineral wool.

As indicated above, it is not necessary for an insulating material to have facings but aside from being a necessary part of the manufacturing process, facings contribute to or affect the following board or panel characteristics:-
a) dimensional stability
b) stiffness
c) resistance to damage
d) fire resistance
e) water vapour transmission
f) gas exchange between the atmosphere of the closed cells in the foam and the external atmosphere (air)

Preventing gas exchange between the atmosphere of the closed cells of the foam and air is a desirable characteristic of a facing, since reduction in this gas exchange optimises the thermal insulation performance of the board or panel over the lifetime of a building, generally defined as 50 years. The gaseous atmosphere of the closed cell makes a significant contribution to foam's thermal insulation performance and those gases incorporated are invariably far superior in terms of contribution to air itself.

The facing therefore ideally needs to act as a gas barrier for the optimum thermal insulation performance of the board or panel. The simplest gas barriers are metal sheets or foils, usually steel or aluminium. The latter is almost exclusively used when a thin foil is the chosen facing, although a metallised (usually aluminium) plastic film such as polyester can also provide the required gas barrier properties. Generally, a facing that has gas barrier properties will also provide a water vapour barrier, which is a necessary characteristic of at least one component in a building envelope.

Thin aluminium foils are ideal for decreasing water vapour transmission through a board and the gas exchange between the closed cells and the external atmosphere. Laminating the foils to other materials such as paper or glass fibre tissue produces facings with a better all-round performance and multi-layer laminates incorporating thin aluminium foils are commonly used to manufacture insulating panels or boards. The bonding materials used to produce these multi-layer laminates will depend on the production technology employed. Some laminators use liquid glues or adhesives and others extrude a thin layer of molten thermoplastic such as polyethylene, which will then act as an adhesive.

It has been found, however, that the bond between a metal facing and an adhesive/primer in an insulation board is weakened due to attack by water. When water adversely affects the metal-adhesive bonds, the resultant delamination of the metal from the laminate layer to which it is attached will adversely affect an insulation board's ability to provide the required insulation performance over the lifetime of a building. The water vapour resistance in this situation would also be adversely affected.

Delamination due to water attack can occur during the construction of a building as a result of wet weather, particularly an extended spell of wet weather, if the insulation board is left exposed prior to completion of the external cladding, e.g. brickwork or roof membranes and tiles.

Water attack, leading to delamination, is believed to take place by the penetration of water at the adhesive/primer interface at the edge of a laminate. It is believed that the water molecules hydrolyse the weaker physical interface bonds and proceed via capillary migration, destroying the adhesion, thus leading to delamination.

It is the object of the present invention to obviate or mitigate at least some of the above mentioned problems associated with the prior art, by providing an improved laminate structure, preferably for use in an insulation board.

In a first aspect, the present invention provides a laminate structure being part of an insulation board comprising:
a) a first layer, which comprises a flexible material, and
b) a second layer, which comprises an insulating material;
wherein an adhesive comprising an organofunctional siloxy compound, optionally grafted to a polymer, is disposed between the first and second layers.

In a third aspect, the present invention provides a process for preparing a laminate structure according to claim 1, the process comprising the following steps:
(i) providing a first layer comprising a flexible material, wherein an adhesive comprising an organofunctional siloxy compound is disposed on at least part of one side of the first layer;
(ii) providing a precursor material to an insulating material;
(iii) disposing on the first layer, on same side as the adhesive, the precursor material; and
(vi) forming the precursor material into a layer of thermally insulating material to form the laminate structure.

The present invention will now be further described. In the following passages different aspects of the invention are defined in more detail. Each aspect so defined may be combined with any other aspect or aspects unless clearly indicated to the contrary. In particular any feature indicated as being preferred or advantageous may be combined with any other feature or features indicated as being preferred or advantageous.

The following description applies to all aspects and embodiments of the present invention.

The insulating layer is preferably a thermally insulating layer.

"Adhesive" includes, but is not limited to, a substance capable of adhering two layers of material together. The adhesive may, for example, comprise a laminant for laminating two layers together in a typical lamination process. "Disposed between" indicates that the adhesive is present between the layers, and may be in direct contact with both of the first and second layers, if, for instance, no further layers are disposed between the first and second layers or a further layer is disposed between the first and second layers and the first layer is an open web allowing the adhesive to contact both first and second layers. The adhesive may be present in one or more further layers disposed between the first and second layers and may not necessarily be in contact with either of the first or second layers. Preferably, the adhesive is in contact with the first layer.

An "organofunctional siloxy compound" is a compound having a siloxy (Si-O) moiety, wherein the silicon atom of the siloxy moiety is covalently bonded to an "organofunctional group or moiety", including, but not limited to, an organic group selected from an alkene, an aminoalkyl, an ureidoalkyl, an acryloxyalkyl or a glycidoxyalkyl. The "organofunctional group or moiety" includes, but is not limited to, groups capable of forming covalent bonds with other organic groups, preferably groups of the same type, e.g. alkenes. Preferably, the organofunctional group or moiety is capable of crosslinking to groups of the same type by radical initiation, as known to those skilled in the art. The oxygen atom of the siloxy group preferably forms part of a hydrolysable moiety, preferably an alkoxy or acetoxy group. As discussed herein, the adhesive may comprise an organofunctional siloxy compound grafted to a polymer, preferably via the reactive organofunctional group or moiety of the siloxy compound. The siloxy compound and the polymer may have been grafted by radical initiation.

The "organofunctional siloxy" compound may be a compound with the general formula:

R₁ -Si - (Rₓ)₃

where Si is silicon, R₁ is the organofunctional group and Rₓ is a hydrolysable alkoxy group or acetoxy group.

Preferably, the adhesive comprises an organofunctional siloxy compound and a further polymer, wherein the siloxy compound and the further polymer are preferably miscible. The siloxy compound may be grafted onto a polymer resin, preferably via the organofunctional moiety of the siloxy compound.

Preferably, if the adhesive comprises the siloxy compound and the further polymer and if the siloxy compound is grafted to a polymer, the polymer to which the siloxy compound is grafted and the further polymer are of the same type. For instance, if the siloxy compound is grafted to polyethylene, the further polymer in the resin is also preferably polyethylene.

"Polymer" will refer herein, unless clearly indicated to the contrary, to both the further polymer, which may be present in the adhesive, and the polymer to which the siloxy compound may be grafted. The polymer is preferably a polymer able to adhere a metal, preferably aluminium, and to a typical foam insulation material, such as a foam insulation material comprising polyurethane polymer, polyisocyanurate, a phenolic polymer, polystyrene, or mixtures/co-polymers thereof. The polymer is preferably a polymer that is able to form covalent bonds with the organofunctional group of the siloxy compound. The polymer is preferably selected from a polyalkene polymer, a polystyrene polymer, an epoxy resin, an acrylic polymer, a cellulosic polymer, a polyester polymer and a polyurethane polymer, or co-polymers thereof. The polymer is preferably a polyalkene, preferably polyethylene, polypropylene or copolymers thereof. When the siloxy compound is grafted to a polymer, the siloxy compound is preferably present in the in an amount of 0.2 wt% to 3 wt%, more preferably 0.3 wt% to 1.6 wt%, of the resultant polymer.

Preferably, the adhesive comprises a slot die extrudable cross-linkable polymer resin comprising a polymer, preferably a polyalkene, grafted to an organo-functional siloxy compound, preferably an organo-functional alkoxy silane. Preferably, the slot die extrudable cross-linkable polymer resin has a melt flow index (as determined according to ASTM D-1238 at 190°C 2.16kg) in the range 3 to 20g/10 minutes. The polymer resin preferably has a density in the range of 0.9 to 0.97 g/cm². As described above, the adhesive may comprise (i) a siloxy compound (as herein described) grafted to a polymer and (ii) one or more further polymers. The further polymers may comprise a compatible polyalkene, including, but not limited to, polyethylene and polypropylene. The polymer, on to which is grafted the siloxy compound, may be compounded (i.e. mixed in the molten phase) or blended (i.e. mixed in the solid phase) with the further polymer(s). Compounded mixtures are preferred due to more consistent properties through more intimate mixing. Certain organofunctional groups may be preferable depending on the nature of the other components which may be present in the adhesive. If the adhesive comprises polyethylene, a styrenic polymer, or mixtures/copolymers thereof, the organofunctional group preferably comprises an alkene, preferably a terminal alkene. If the adhesive comprises an epoxy compound, a melamine compound, a phenolic compound, a polyurethane compound, an acrylic compound, or any mixtures thereof, the organofunctional compound preferably comprises an aminoalkyl. If the adhesive comprises a phenolic compound, a cellulosic compound, or a mixture thereof, preferably the organofunctional group comprises a ureidoalkyl group. If the adhesive comprises polyester, a styrenic compound, or a mixture thereof, the organofunctional group is preferably an acryloxyalkyl group. "Alkyl" includes, but is not limited to, straight or branched C₁ to C₁₀ alkyl groups.

Preferably, the organofunctional siloxy compound, either in the adhesive or prior to grafting to a polymer, is a compound of the formula: 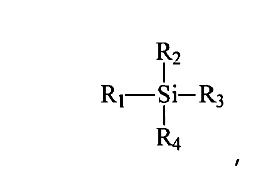
wherein R₁ is an organofunctional group selected from C₂ - C₆ alkene, amino(C₁ - C₆ alkyl), ureido (C₁ - C₆ alkyl), methylacryloxy(C₁ - C₆ alkyl) and glycidoxy (C₁ - C₆ alkyl),
R₂, R₃ and R₄ are independently selected from R₁, C₁ - C₆ alkyl, C₆ - C₁₂ aryl, halogens, groups of the formula N(R₅)(R₆), -OR₅, and R₅CO₂-, -O(CH₂)ₙOR₅ wherein at least one of R₂, R₃ and R₄ is a group having the formula -OR₅, R₅CO₂-, or -O(CH₂)ₙOR₅, wherein n is from 1 to 10, R₅ and R₆, if present, are independently C₁ - C₆ hydrocarbons.

Preferably, R₁ is a terminal C₂ - C₆ alkene. Preferably, R₁ is -CH=CH₂.

Preferably, R₅ is a C₁ - C₅ alkane. If R₆ is present, preferably R₆ is a C₁ - C₅ alkane.

Preferably, R₂ to R₄ are each independently either OCH₃ or OC₂H₅.

Preferably, the organofunctional siloxy compound either in the adhesive or prior to grafting to a polymer is selected from

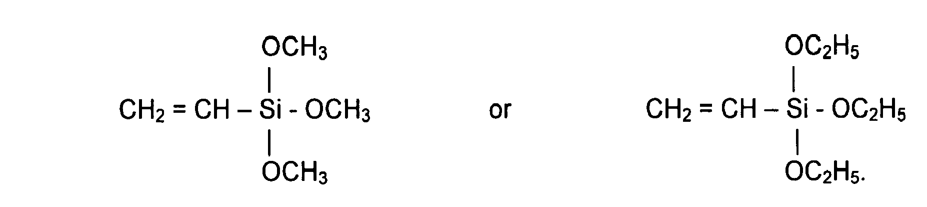

If the first layer comprises a metal, preferably the metal reacts in the presence of water with the organofunctional siloxy compound to form covalent-metal-oxygen-silicon bonds.

The laminate structure may be, or form part of, an insulation board.

The first layer preferably comprises a flexible material. The flexible material may comprise paper, metal or a metal compound, plastics, glass, or any combination thereof. Preferably, the flexible layer comprises a metal or a metal compound. The first layer may comprise steel, aluminium or any alloys thereof. Preferably, the first layer comprises aluminium. Most preferably, the aluminium is an aluminium foil.

Alternatively, the first layer may comprise a metallised plastic film. Most preferably the metallised plastic film comprises aluminium, or an alloy thereof. Metallised plastic films are well known to the skilled person in the field.

The first layer (and third layer described below) may be a facing for a an insulation board. The first layer (and third layer, described below) may be a laminate such as a typical laminate used as a facing for an insulation board.

The first layer preferably has a thickness of 6µm or more. The first layer preferably has a thickness of 50µm or less, more preferably 30µm or less.

An adhesive may be present on or incorporated into a surface of the insulating material of the second layer, said surface being the closest surface of the second layer to the first layer and/or third layer, if present. This adhesive may comprise an organofunctional siloxy compound as defined above.

Preferably, the insulating material comprises a foam, preferably a closed cell foam. The foam may comprise polyurethane, polyisocyanurate, phenolic compounds/polymers and polystyrene, or mixtures/co-polymers thereof.

Alternatively, the insulating material may comprise a mineral wool. Mineral wool is generally a fibrous material made by blowing steam or air though molten slag and its use is well known in insulation.

The laminate structure may further comprise:
c) a third layer, which comprises a flexible material,
wherein the third layer is positioned adjacent to the second layer on a side opposite to the first layer, and wherein an adhesive comprising an organofunctional siloxy compound is disposed between the second and third layers. The flexible material of the third layer may be as herein described for the flexible material of the first layer.

A further layer of flexible material may be disposed between the first and second layers and/or between the second and third layers, if a third layer is present. The flexible material of the further layer may comprise one or more of kraft paper, plastics film, metalised film, glass tissue, scrim (as described below), non-woven polymeric web, fabric or aluminium foil. The layer of flexible material may comprise a fibrous layer as described below. A strengthening layer of scrim (i.e. an open web) may be disposed between the first and second layers and/or between the second and third layers, if a third layer is present.

A fibrous layer may be disposed between the first and second layers and/or between the second and third layers, if a third layer is present. If this is the case, the adhesive comprising an organofunctional siloxy compound may be disposed between the first layer (or third layer) and the fibrous layer. The fibrous layer may be in the form of a scrim. Preferably, the fibrous layer comprises paper or glass fibres. Glass fibre is a material consisting of matted fine glass fibres, commonly used in insulation. However, it will be appreciated that the fibrous layer may comprise other well-known insulating materials, for example glass wool. Glass wool is fine spun glass massed into a wool-like bulk for use in insulation.

In a sixth aspect, the present invention further provides a laminate structure comprising a plurality of layered units, wherein each of the layered units comprises:
a) a first layer, which comprises a flexible material; and
b) a second layer, which comprises an insulating material;
wherein an adhesive comprising an organofunctional, siloxy compound, optionally grafted to a polymer, is disposed between the first and second layers. The material of the flexible layer may be as described above in relation to the first aspect of the invention.

The laminate structure may comprise the following layers in the order mentioned:
a first layer comprising a metal or a metal compound, preferably aluminium or steel;
optionally a first fibrous layer, preferably comprising paper and/or glass fibres;
a second layer, which comprises an insulating material preferably comprising foam or a mineral wool;
optionally a second fibrous layer, preferably comprising paper and/or glass fibres;
   a third layer comprising a metal or a metal compound, preferably aluminium or steel,
      wherein an adhesive comprising an organofunctional siloxy compound as described herein is disposed on at least part of one side of the first and third layers, said side for each of the first and third layers being a side of the first or third layer closest to the second layer.

As mentioned above, the present invention also provides processes for preparing a laminate structure as defined in any one of the second to the fifth aspects of the invention. The composition of the first, second, third and further layers and the adhesives in the processes of the present invention may be as described herein in relation to the first aspect of the present invention.

The process of the second and third aspects may further comprise the following steps:
providing, at a fixed distance from the first layer and prior to forming the insulating material, a third layer comprising a flexible material and having a second adhesive disposed thereon such that, during formation of the layer of insulating material, the precursor material expands to contact the third layer and/or the second adhesive disposed thereon, to form the laminate structure comprising
first and third layers separated by approximately the fixed distance, each of first and third layers comprising a flexible material, and
a second layer, which comprises an insulating material, disposed between and adhered to the first and third layers.

Preferably, the insulating material comprises a foam and the precursor is a foam precursor.

The process of the second or third aspects of the present invention may further comprise:
providing a third layer having a second adhesive disposed on a side thereon, the third layer comprising a flexible material, and
contacting, prior to forming the insulating material, a side of the third layer having the second adhesive thereon with the precursor,
forming the precursor material into the layer of insulating material to form the laminate structure comprising
first and third layers, each of first and third layers comprising a flexible material, and
a second layer, which comprises an insulating material, disposed between and adhered to the first and third layers. The second adhesive may comprise an organofunctional siloxy compound as defined herein.

In the processes described above, the organofunctional siloxy compound may be grafted to a polymer as herein described.

Preferably, the insulating material comprises a foam and the precursor is a foam precursor.

If the third layer forms part of a facing comprising the first layer and a fibrous layer, having disposed therebetween an adhesive comprising an organofunctional siloxy compound, then in either process in which the third layer is present above, the facing will be orientated such that the precursor material contacts the fibrous layer during the process.

In the processes defined above, the first layer (and third layer, if present) used at the start of each process may be a laminate, (hereinafter referred to as a laminate first layer) such as a typical laminate used as a facing for an insulation board. The first layer may thus comprise a plurality of sublayers. For example, the first layer may be a laminate comprising a layer of flexible material as herein described, and a further layer as herein described, where an adhesive, preferably comprising an organofunctional siloxy compound, optionally grafted to a polymer, is disposed between the layer of flexible material and the further layer. One or more tie layers comprising polyethylene or polypropylene may be disposed between a layer comprising the organofunctional siloxy compound and the first layer. One or more tie layers comprising polyethylene or polypropylene may be disposed between a layer comprising the organofunctional siloxy compound and the further layer.

The present invention further provides a process for preparing a laminate structure, the process comprising the following steps:
(i) providing a laminate first layer comprising a plurality of sublayers, wherein the laminate first layer comprises an adhesive comprising an organofunctional siloxy compound either on or in at least one of the sublayers;
(ii) providing a precursor material to an insulating material;
(iii) disposing the precursor material on a first side of the first layer; and
(vi) forming the precursor into a layer of insulating material to form the laminate structure.

The present invention further provides a process for preparing a laminate structure, the process comprising the following steps:
(i) providing a laminate first layer comprising a plurality of sublayers, wherein the laminate first layer comprises an adhesive comprising an organofunctional siloxy compound either on or in at least one of the sublayers;
(ii) providing a precursor material to an insulating material;
(iii) disposing on one side of the first layer, the precursor material; and
(vi) forming the precursor material into a layer of insulating material to form the laminate structure.

The present invention further provides a process for preparing a laminate structure, the process comprising the following steps:
(i) providing a laminate first layer comprising a plurality of sublayers, wherein the laminate first layer comprises an adhesive comprising an organofunctional siloxy compound either on or in at least one of the sublayers;
(ii) providing an adhesive;
(iii) providing a second layer comprising an insulating material;
(iv) disposing the adhesive on either one of the first or second layers; and
(v) contacting the other of the first or second layers with the adhesive such that the layers adhere to form the laminate structure.

The present invention further provides a process for preparing a laminate structure, the process comprising the following steps:
(i) providing a laminate first layer comprising a plurality of sublayers, wherein the laminate first layer comprises an adhesive comprising an organofunctional siloxy compound either on or in at least one of the sublayers; and
(ii) providing a second layer comprising an insulating material;
(iii) adhering the first layer to the second layer such that the layers form the laminate structure.

The laminate first layer will preferably have as an outer sub layer a layer comprising a metal or a metal compound. The organofunctional siloxy compound may be grafted to a polymer as herein described. Preferably, the adhesive comprising the organofunctional siloxy compound is disposed on the interior side of the outermost sublayer.

While not being bound by the following theory, it is believed that the hydrolysable group of the siloxy compound will react with water to form hydroxy (-OH) groups which in turn condense with, for instance, an aluminium surface to form strong, possibly partially covalent, bonds. The properly selected organofunctional group also forms strong bonds with the adhesive polymer.

The process for preparing the laminate structure according to the present invention may be used to prepare a laminate structure as herein described.

The present invention will now be described further with reference to the following examples:

### Examples

It has been found that a glass fibre tissue laminated to aluminium foil using standard polyethylene extrusion technology delaminates within days when continuously exposed to water. The following examples provides an insulation board that is much less prone to delamination.

The following examples illustrate the production of a laminate structure in the form of an insulation board or panel consisting of a rigid polyurethane or polyisocyanurate foam core (the second layer) with both major faces of this layer bonded to a second laminate. Each second laminate consists of a layer of aluminium foil (the first/third layer) bonded to a layer of glass fibre tissue with polyethylene. In the boards, the laminate has the following structure if viewed in cross section:
(i) layer of aluminium (first layer)
(ii) layer of polyethylene comprising an organofunctional siloxy compound
(iii) layer of glass fibre tissue (fibrous layer)
(vi) layer of foamed insulation material (second layer)
(v) layer of glass fibre tissue (fibrous layer)
(vi) layer of polyethylene comprising an organofunctional siloxy compound
(vii) layer of aluminium (third layer).

Layers (i), (ii) and (iii) together form a facing. Likewise, layers (v), (vi) and (vii) together form a facing.

### Example 1 - The 'free-rise' process.

The following is an example of a continuous process for making an embodiment of the present invention. An insulation board was made by dispensing a liquid chemical mixture of diphenyl methane diisocyanate (MDI), polyol, pentane blowing agent, surfactant and catalyst - in proportions such as to produce a polyisocyanurate polymer of an index 250 - onto a continuously moving bottom facing. This facing consisted of a first layer of aluminium foil and a layer of glass fibre tissue, with the aluminium foil bonded to the glass fibre tissue by an adhesive. This adhesive comprised polyethylene grafted to trimethoxysilane (as described below).

The bottom facing and liquid mixture thereon is carried towards a pair of metering rolls where the liquid mixture on the bottom facing is brought into contact with a top facing. The top facing has the same structure as the bottom facing and is orientated such that the glass fibre tissue faces downwards and therefore contacts the liquid mixture on the bottom facing. By passing the top and bottom facings through the metering rolls, the liquid mixture therebetween is spread and metered into a thin chemical layer of approximately 1 mm thick between the top and bottom facings. The top and bottom facings are then passed into an oven at a temperature of 60°C and for a period of 40 to 60 seconds where the mixture foams to the required thickness of approximately 35 mm (determined by the thickness of the liquid layer), hardens and cures and bonds to the glass fibre layer of the laminates. As the insulation board exits the oven, it is trimmed to width and cut to length.

The insulation board was then found to survive at least six months exposure to a continuously running shower of water without delamination. The shower of water was used in order to simulate rain.

### Example 2 - The 'restrained rise' process

The following is an example of a continuous process for making an embodiment of the present invention. Approximately 1.12kg of a liquid chemical mixture of diphenyl methane diisocyanate (MDI), polyol, pentane blowing agent, surfactant and catalyst - in proportions such as to produce a polyisocyanurate polymer - was dispensed (per 1m² of the facing) onto a continuously moving bottom facing. This facing consisted of a first layer of aluminium foil and a layer of glass fibre tissue, with the aluminium foil bonded to the glass fibre tissue by an adhesive. This adhesive comprised polyethylene bonded to/mixed with trimethoxysilane. In this process, the liquid mixture is carried on the bottom facing on the lower conveyor of a heated double-belt conveyor in which the upper and lower conveyors are set apart at the final product thickness, which was in the range of 25 to 120 mm. A top facing is carried by the upper conveyor, said top facing having the same structure as the bottom facing, and orientated such that the glass fibre layer is facing downwards. The liquid mixture on the bottom facings foams in an oven as described in relation to Example 1, rises to meet the top facing on the upper conveyor, hardens and cures. On exiting the conveyor the resultant insulation board is trimmed to width and cut to length.

The insulation board was then found to survive at least six months exposure to a continuously running shower of water without delamination. As above, the shower of water was used to simulate rain.

### Comparative-Examples

A board was made according to each of the processes defined in Example 1 and Example 2, whereby polyethylene comprising vinyl trimethoxysilane was replaced with polyethylene, available from a large number of commercial outlets. The resultant boards made by either process above were found to be susceptible to delamination of the foil from the polyethylene when exposed to a continuous shower of water over a period of 3 to 5 days.

### Example 3 - Production of the facing

In the Examples below, the laminated facings used in Example 1 were prepared by slot die extrusion of a laminant layer (i.e. the adhesive layer) between a layer of aluminium foil and a layer of glass fibre tissue.

Details of each Example are as described in Table 1. In each Example the laminant layer was a compounded mixture (i.e. mixed in the molten phase) of an organosilane grafted polyethylene and a polyethylene.

The organosilane grafted polyethylene was prepared by dispersing 2 wt% vinyltrimethoxysilane into molten polyethylene with a peroxide initiator. After dispersion, the temperature of the melt was raised to split the initiator, and generate free radicals. The organosilane grafts on to the polyethylene in a free radical process.

This modified polyethylene was then used to extrusion laminate the aluminium foil to the glass tissue.

Extrusion was performed using a conventional slot die extruder with barrel pressures in the range of about 790 psi (5.4 MPa) to about 3300 psi (22.8 MPa) and a melt temperature (as detailed in Table 1) of between 277°C and 335°C. To prevent or reduce premature cross-linking, it is important to maintain relatively dry conditions during compounding of the cross-linkable polymer resin and during extrusion. Therefore, during compounding and extrusion, steps were taken to exclude as much moisture as possible. The maximum extrusion width was about 1700 mm, deckled down to an extrusion width of about 1350 mm.

In Example 6A the laminant material was mono-extruded. In Examples 1A to 5A the laminant material was co-extruded with a layer as indicated in Table 1. In Examples 4A and 5A, the laminant material consisted of two co-extruded layers of the same material. In each case, the laminant layer was laminated so as to be in direct contact with the dull side of the aluminium foil.

The line speed of lamination was in the range of about 80 to 120 m/min, with laminant coating weight of about 30 to 42 g/m² (corresponding to an approximate thickness of about 27 to 36 µm). The laminants used in the Examples enabled a very consistent coating weight to be produced across the width of the laminated product web.

The cross-linkable polymer materials were surprisingly good in extrusion, with little gelling and little void formulation.

**Table 1**

| **Example** | **Silane-containing layer** | **Silane content (wt%)** | **Mono/Co-Extrusion** | | | **Aluminium Foil (g m⁻²)** | **Glass Tissue Layer (g m⁻²)** | **Coating Weight of Laminant (g m⁻²)** | **Extrusion Melt T (°C)** |
|---|---|---|---|---|---|---|---|---|---|
| | | | **Mono or Co-ex** | **Co-ex Polymer** | **Silane-containing layer/co-ex** | | | | |
| 1A | P-Si 15% G 85% | 0.30 | Co-ex | G | 25/75 | 32 | 35 | 40 | 277-283 |
| 2A | G-Si 50% G 50% | 1.00 | Co-ex | HDPE | 25/75 | 32 | 25 | 42 | 308 |
| 3A | G-Si 50% G 50% | 1.00 | Co-ex | HDPE | 25/75 | 32 | 25 | 38 | 315 |
| 4A | G-Si 50% G 50% | 1.00 | Co-ex | G-Si 50% G 50% | 25/75 | 32 | 25 | 30 | 311 |
| 5A | G-Si 80% G 20% | 1.60 | Co-ex | G-Si 80% G 20% | 25/75 | 48.6 | 25 | 32 | 325 |
| 6A | G-Si 80% G 20% | 1.60 | Mono | None | N/A | 48.6 | 25 | 32 | 322 |

The materials used in the Examples were as follows:-
- P-Si: a polyethylene grafted with 2 wt% vinyltrimethoxysilane (Micropol), density of 0.964 g/cm³, MFI 8 or 11 g/10 min.
- G: a polyethylene (Polimeri Europa), density of 0.923 g/cm³ (23°C), MFI 4 g/10 min.
- G-Si: polyethylene G grafted with 2 wt% vinyltrimethoxysilane.
- HDPE: High density polyethylene, density 0.96 g/cm³, MFI 8 or 11 g/10 min.

Melt flow index (MFI) refers to MFI as determined in accordance with ASTM D-1238 at 190°C, 2.16kg.

### Results

Each of the laminated facings produced in the Examples exhibited improved adhesion over laminates produced using conventional polyethylene as laminant (i.e. not cross-linkable polyethylene) to aluminium foil as shown by a much reduced tendency to de-laminate in an immersion test.

In the immersion test, samples of the laminated product were immersed in water at room temperature. Samples according to Examples 1A to 6A showed no delamination after at least 2 months immersion in water. In contrast, conventional laminated facings delaminated in identical conditions in less than 1 week.
More information on producing laminated facings for use in the present invention are described in a UK patent application, filed on 22 April 2005 in the name of BSK as the applicant and entitled "method for forming laminated products", which is incorporated herein by reference.

It has been discovered that (possibly owing to the thinness of the laminant layer) it is sufficient to allow cross-linking to occur merely by exposing the laminate to ambient, atmospheric moisture. Thus, aging the laminates after production appears to result in much improved cross-linking and results in improved adhesion between the laminant and foil layers. Complete cross-linking depends on relative humidity and temperature, but is usually complete after 24 hours, sometimes up to 3 days, and in dry cold conditions even longer (e.g. several weeks). To speed cross-linking, the moisture content of the air may be increased.

It will be appreciated that if the first layer comprises aluminium foil, the foil may be reacted with the organofunctional siloxy compound prior to forming the laminate structures of the present invention.

The inventors have also discovered an addition benefit of incorporating the organofunctional siloxy compound in the polyethylene layer prior to lamination when the laminate structure comprises a fibrous layer of glass tissue and a first layer of aluminium foil. The inventors have observed that water migrates along the surface of glass where this is bonded to an adhesive with weak interfacial bonds. This reduces the reinforcing effect of the glass fibres but also provides another route to the aluminium/polyethylene interface for water molecules.

The laminate structures of the present invention have been found to be less prone to delamination than those of the prior art. An additional advantage of the laminate structure is their increased fire-resistance. This is believed to be because of cross-linking between the siloxy compounds, thereby increasing molecular weight of the resin.

## Claims

1. A laminate structure, wherein the laminate structure is or constitutes part of an insulation board, the structure comprising:
a) a first layer, which comprises a flexible material; and
b) a second layer, which comprises a thermally insulating material, wherein the insulating material comprises a foam or a mineral wool;
wherein an adhesive comprising an organofunctional siloxy compound, optionally grafted to a polymer, is disposed between the first and second layers.

2. A laminate structure as claimed in claim 1, wherein the flexible material comprises a metal or a metal compound.

3. A laminate structure as claimed in clam 1 or claim 2, wherein the siloxy compound is grafted to a polymer.

4. A laminate structure as claimed in any one of the preceding claims, wherein the polymer is selected from a polyalkene polymer, a polystyrene polymer, an epoxy resin, an acrylic polymer, a cellulosic polymer, a polyester polymer, a polyurethane polymer, or co-polymers thereof.

5. A laminate structure as claimed in claim 4, wherein the polyalkene is polyethylene or polypropylene.

6. A laminate structure as claimed in any one of the preceding claims, wherein the organofunctional siloxy compound, either in the adhesive or prior to grafting to the polymer, is a compound of the formula: 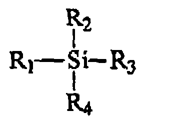 wherein R₁ is selected from C₂ - C₆ alkene, amino (C₁ - C₆ alkyl), ureido(C₁ - C₆ alkyl), methylacryloxy(C₁ - C₆ alkyl) and glycidoxy(C₁ - C₆ alkyl),
R₂, R₃ and R₄ are independently selected from R₁, C₁ - C₆ alkyl, C₆ - C₁₂ aryl, halogens, groups of the formula N(R₅)(R₆), -OR₅, and R₅CO₂-, -O(CH₂)ₙOR₅, wherein at least one of R₂, R₃ and R₄ is a group having the formula -OR₅, -O₂CR₅, or -O(CH₂)ₙOR₅, wherein n is from 1 to 10, and R₅ and R₆, if present, are independently C₁ - C₆ hydrocarbons.

7. A laminate structure as claimed in claim 6, wherein R₁ is a terminal C₂ - C₆ alkene.

8. A laminate structure as claimed in claim 7, wherein R₁ is -CH=CH₂.

9. A laminate structure as claimed in any one of claims 6 to 8, wherein R₂, R₃ and R₄ are each independently selected from a group having the formula -OR₅, R₅CO₂- or -O(CH₂)ₙOR₅, wherein n is from 1 to 10 and R₅ is a C₁ - C₆ alkane.

10. A laminate structure as claimed in any one of claims 6 to 9, wherein R₂ to R₄ are each independently either -OCH₃ or -OC₂H₅.

11. A laminated structure as claimed in any one the preceding claims, wherein the organofunctional siloxy compound either in the adhesive or prior to grafting to the polymer is selected from

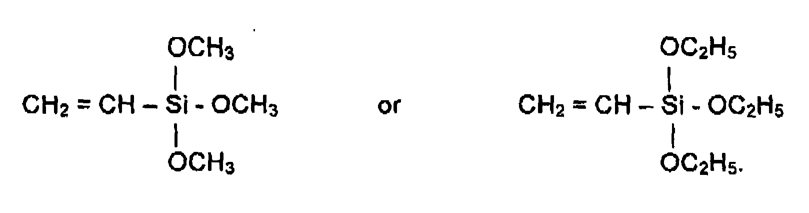

12. A laminate structure as claimed in any one of the preceding claims, wherein the first layer comprises aluminium or an alloy thereof.

13. A laminate structure as claimed in any of the preceding claims, wherein the first layer comprises aluminium foil.

14. A laminate structure as claimed in any one of the preceding claims, wherein the first layer comprises a metallised plastic film.

15. A laminate structure as claimed in any of the preceding claims, wherein the foam comprises polyurethane, polyisocyanurate, phenolic polymers, polystyrene or mixtures/co-polymers thereof.

16. A laminate structure as claimed in any one of the preceding claims further comprising:
c) a third layer, which comprises a flexible material,
wherein the third layer is positioned adjacent to the second layer on a side opposite to the first layer, and wherein an adhesive comprising an organofunctional siloxy compound is disposed between the second and third layers.

17. A laminated structure as claimed in claim 16, wherein the third layer comprises a metal or a metal compound.

18. A laminate structure as claimed in any one of the preceding claims, wherein paper or glass fibres are disposed between the first and second layers and, optionally, if the third layer is present between the second and third layers.

19. A laminate structure as claimed in any one of the preceding claims, the structure comprising the following layers in the order mentioned:
a first layer comprising aluminium or steel;
a first fibrous layer comprising paper and/or glass fibres;
a second layer, which comprises an insulating material comprising foam or a mineral wool;
a second fibrous layer comprising paper and/or glass fibres;
a third layer comprising aluminium or steel,
wherein an adhesive comprising an organofunctional siloxy compound, optionally grafted to a polymer, is disposed on at least part of one side of each of the first and third layers, said side for each of the first and third layers being a side of the first or third layer closest to the second layer.

20. A laminate structure wherein the structure comprises a plurality of layered structures as defined in claim 1 or 2.

21. A process for preparing the laminate structure of claim 1, the process comprising the following steps:
(i) providing a first layer comprising a flexible material, wherein an adhesive comprising an organofunctional siloxy compound is disposed on at least part of one side of the first layer;
(ii) providing a precursor material to a thermally insulating material;
(iii) disposing on the first layer, on same side as the adhesive, the precursor material; and
(vi) forming the precursor material into a layer of thermally insulating material to form the laminate structure.

22. A process as claimed in claim 21, wherein the insulating material comprises a foam and the precursor is a foam precursor.

23. A process as claimed in claims 21 or claim 22, further comprising
providing, at a fixed distance from the first layer and prior to forming the insulating material, a third layer comprising a flexible material and having a second adhesive disposed thereon such that, during formation of the layer of insulating material, the precursor material expands to contact the third layer and/or the second adhesive disposed thereon, to form the laminate structure comprising
first and third layers separated by approximately the fixed distance, each of first and third layers comprising a flexible material, and
a second layer, which comprises an insulating material, disposed between and adhered to the first and third layers.

24. A process as claimed in any one of claims 21 to 22, further comprising
providing a third layer having a second adhesive disposed on a side thereon, the third layer comprising a flexible material;
contacting, following step (iii) in claim 21, a side of the third layer having the second adhesive thereon with the precursor;
forming the precursor material into the layer of insulating material to form the laminate structure comprising
first and third layers, each of first and third layers comprising a flexible material, and
a second layer, which comprises an insulating material, disposed between and adhered to the first and third layers.

25. A process as claimed in any one of claims 21 to 24, wherein the flexible material of the first layer and/or third layer comprises a metal or a metal compound.

26. A process as claimed in any one of claims 21 to 25, wherein the organofunctional siloxy compound has been grafted to a polymer.

## Patentansprüche

1. Laminatstruktur, wobei die Laminatstruktur eine Dämmplatte ist oder einen Teil einer Dämmplatte bildet, wobei die Struktur umfasst:
a) eine erste Schicht, die ein flexibles Material umfasst, und
b) eine zweite Schicht, die einen Wärmedämmstoff umfasst, wobei der Dämmstoff einen Schaum oder eine Mineralwolle umfasst;
wobei ein Klebstoff, der eine organofunktionelle Siloxyverbindung umfasst, die optional auf ein Polymer gepfropft ist, zwischen der ersten Schicht und der zweiten Schicht angeordnet ist.

2. Laminatstruktur nach Anspruch 1, wobei das flexible Material ein Metall oder eine Metallverbindung umfasst.

3. Laminatstruktur nach Anspruch 1 oder Anspruch 2, wobei die Siloxyverbindung auf ein Polymer gepfropft ist.

4. Laminatstruktur nach einem der vorhergehenden Ansprüche, wobei das Polymer unter einem Polyalkenpolymer, einem Polystyrolpolymer, einem Epoxyharz, einem Acrylpolymer, einem Cellulosepolymer, einem Polyesterpolymer, einem Polyurethanpolymer oder Copolymeren davon ausgewählt wird.

5. Laminatstruktur nach Anspruch 4, wobei das Polyalken ein Polyethylen oder Polypropylen ist.

6. Laminatstruktur nach einem der vorhergehenden Ansprüche, wobei die organofunktionelle Siloxyverbindung, entweder in dem Klebstoff oder vor dem Pfropfen auf das Polymer, eine Verbindung der Formel 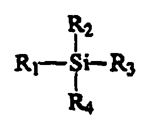 ist, worin R₁ unter (C₂-C₆)-Alken, Amino-(C₁-C₆)-alkyl, Ureido-(C₁-C₆)-alkyl, Methylacryloxy-(C₁-C₆)-alkyl und Glycidoxy-(C₁-C₆)-alkyl ausgewählt wird,
R₂, R₃ und R₄ unabhängig unter R₁, (C₁-C₆)-Alkyl, (C₆-C₁₂)-Aryl, Halogenen, Gruppen der Formel N(R₅)(R₆), -OR₅ und R₅CO₂-, -O(CH₂)ₙOR₅ ausgewählt werden, wobei mindestens einer der Reste R₂, R₃ und R₄ eine Gruppe ist, die die Formel -OR₅, -O₂CR₅ oder -O(CH₂)ₙOR₅ aufweist, worin n im Bereich von 1 bis 10 liegt und R₅ und R₆, sofern vorhanden, unabhängig (C₁-C₆)-Kohlenwasserstoffe sind.

7. Laminatstruktur nach Anspruch 6, wobei R₁ ein endständiges (C₂-C₆)-Alken ist.

8. Laminatstruktur nach Anspruch 7, wobei R₁ -CH=CH₂ ist.

9. Laminatstruktur nach einem der Ansprüche 6 bis 8, wobei R₂, R₃ und R₄ unabhängig voneinander unter den Gruppen ausgewählt werden, die die Formel -OR₅, R₅CO₂- oder -O(CH₂)ₙOR₅ haben, worin n im Bereich von 1 bis 10 liegt und R₅ ein (C₁-C₆)-Alkan ist.

10. Laminatstruktur nach einem der Ansprüche 6 bis 9, wobei R₂ bis R₄ unabhängig voneinander entweder -OCH₃ oder -OC₂H₅ bedeuten.

11. Laminatstruktur nach einem der vorhergehenden Ansprüche, wobei die organofunktionelle Siloxyverbindung entweder in dem Klebstoff oder vor dem Pfropfen auf das Polymer unter 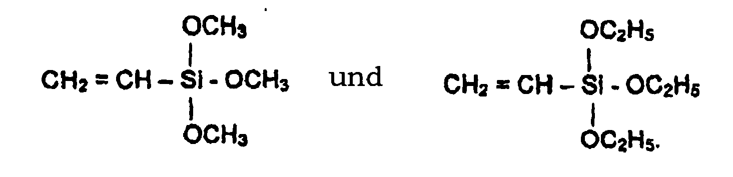 ausgewählt wird.

12. Laminatstruktur nach einem der vorhergehenden Ansprüche, wobei die erste Schicht Aluminium oder eine Legierung davon umfasst.

13. Laminatstruktur nach einem der vorhergehenden Ansprüche, wobei die erste Schicht eine Aluminiumfolie umfasst.

14. Laminatstruktur nach einem der vorhergehenden Ansprüche, wobei die erste Schicht einen metallisierten Kunststofffilm umfasst.

15. Laminatstruktur nach einem der vorhergehenden Ansprüche, wobei der Schaum Polyurethan, Polyisocyanurat, phenolische Polymere, Polystyrol oder Gemische/Copolymere davon umfasst.

16. Laminatstruktur nach einem der vorhergehenden Ansprüche, die weiterhin umfasst:
c) eine dritte Schicht, die ein flexibles Material umfasst,
wobei die dritte Schicht benachbart zu der zweiten Schicht auf der Seite, die der ersten Schicht gegenüberliegt, positioniert ist und wobei ein Klebstoff, der eine organofunktionelle Siloxyverbindung umfasst, zwischen der zweiten Schicht und der dritten Schicht angeordnet ist.

17. Laminatstruktur nach Anspruch 16, wobei die dritte Schicht ein Metall oder eine Metallverbindung umfasst.

18. Laminatstruktur nach einem der vorhergehenden Ansprüche, wobei Papier- oder Glasfasern zwischen der ersten Schicht und der zweiten Schicht und optional, falls die dritte Schicht vorhanden ist, zwischen der zweiten Schicht und der dritten Schicht angeordnet sind.

19. Laminatstruktur nach einem der vorhergehenden Ansprüche,
wobei die Struktur die folgenden Schichten in der angegebenen Reihenfolge umfasst:
eine erste Schicht, die Aluminium oder Stahl umfasst;
eine erste faserige Schicht, die Papier- und/oder Glasfasern umfasst;
eine zweite Schicht, die einen Dämmstoff umfasst, der einen Schaum oder eine Mineralwolle umfasst;
eine zweite faserige Schicht, die Papier- und/ oder Glasfasern umfasst,
eine dritte Schicht, die Aluminium oder Stahl umfasst,
wobei ein Klebstoff, der eine organofunktionelle Siloxyverbindung umfasst, die optional auf ein Polymer gepfropft ist, auf mindestens einem Teil einer Seite sowohl der ersten Schicht als auch der dritten Schicht angeordnet ist, wobei diese Seite sowohl bei der ersten Schicht als auch der dritten Schicht die Seite der ersten Schicht oder dritten Schicht ist, die sich am nächsten bei der zweiten Schicht befindet.

20. Laminatstruktur, wobei die Struktur eine Vielzahl geschichteter Strukturen umfasst, wie sie in Anspruch 1 oder 2 definiert sind.

21. Verfahren zur Herstellung der Laminatstruktur nach Anspruch 1, wobei das Verfahren die folgenden Schritte umfasst:
(i) Bereitstellen einer ersten Schicht, die ein flexibles Material umfasst, wobei ein Klebstoff, der eine organofunktionelle Siloxyverbindung umfasst, auf mindestens einen Teil einer Seite der ersten Schicht aufgebracht wird;
(ii) Bereitstellen eines Vorläufermaterials für einen Wärmedämmstoff;
(iii) Aufbringen des Vorläufermaterials auf die erste Schicht auf der gleichen Seite wie der Klebstoff; und
(iv) Formen des Vorläufermaterials zu einer Schicht des thermisch isolierenden Materials, um die Laminatstruktur zu bilden.

22. Verfahren nach Anspruch 21, wobei das isolierende Material einen Schaum umfasst und der Vorläufer ein Schaumvorläufer ist.

23. Verfahren nach Anspruch 21 oder Anspruch 22, das weiterhin umfasst:
Bereitstellen, in einem festgelegten Abstand von der ersten Schicht und vor der Bildung des Dämmstoffs, einer dritten Schicht, die ein flexibles Material umfasst und auf die ein zweiter Klebstoff so aufgebracht ist, dass während der Bildung der Schicht aus dem Dämmstoff das Vorläufermaterial so expandiert, dass es mit der dritten Schicht und/oder dem zweiten Klebstoff, der darauf aufgebracht ist, in Kontakt tritt, um die Laminatstruktur zu bilden, die
eine erste Schicht und eine dritte Schicht, die in etwa durch den festgelegten Abstand voneinander getrennt sind, wobei sowohl die erste Schicht als auch die dritte Schicht ein flexibles Material umfasst, und
und eine zweite Schicht umfasst, die einen Dämmstoff umfasst, der zwischen der ersten Schicht und der dritten Schicht angeordnet ist und an diesen Schichten haftet.

24. Verfahren nach einem der Ansprüche 21 bis 22, das weiterhin umfasst:
Bereitstellen einer dritten Schicht, die einen zweiten Klebstoff aufweist, der auf eine Seite der dritten Schicht aufgebracht ist, wobei die dritte Schicht ein flexibles Material umfasst;
Inkontaktbringen, nach Schritt (iii) in Anspruch 21, der Seite der dritten Schicht, auf der sich der zweite Klebstoff befindet, mit dem Vorläufer;
Formen des Vorläufermaterials zu der Schicht aus dem Dämmstoff, um die Laminatstruktur zu bilden, die umfasst:
eine erste Schicht und eine dritte Schicht, wobei sowohl die erste Schicht als auch die dritte Schicht ein flexibles Material umfasst, und
eine zweite Schicht, die einen Dämmstoff umfasst, der zwischen der ersten Schicht und der dritten Schicht angeordnet ist und an diesen Schichten haftet.

25. Verfahren nach einem der Ansprüche 21 bis 24, wobei das flexible Material der ersten Schicht und/oder der dritten Schicht ein Metall oder eine Metallverbindung umfasst.

26. Verfahren nach einem der Ansprüche 21 bis 25, wobei die organofunktionelle Siloxyverbindung auf ein Polymer gepfropft worden ist.

## Revendications

1. Structure stratifiée, dans laquelle la structure stratifiée est un panneau isolant ou constitue une partie d'un panneau isolant, la structure comprenant :
a) une première couche, qui comprend un matériau flexible ; et
b) une deuxième couche, qui comprend un matériau thermiquement isolant, le matériau isolant comprenant une mousse ou une laine minérale ;
dans laquelle un adhésif comprenant un composé siloxy organofonctionnel, facultativement greffé à un polymère, est disposé entre les première et deuxième couches.

2. Structure stratifiée selon la revendication 1, dans laquelle le matériau flexible comprend un métal ou un composé métallique.

3. Structure stratifiée selon la revendication 1 ou la revendication 2, dans laquelle le composé siloxy est greffé à un polymère.

4. Structure stratifiée selon l'une quelconque des revendications précédentes, dans laquelle le polymère est choisi parmi un polymère polyalcène, un polymère polystyrène, une résine époxy, un polymère acrylique, un polymère cellulosique, un polymère polyester, un polymère polyuréthanne, ou des copolymères de ceux-ci.

5. Structure stratifiée selon la revendication 4, dans laquelle le polyalcène est un polyéthylène ou un polypropylène.

6. Structure stratifiée selon l'une quelconque des revendications précédentes, dans laquelle le composé siloxy organofonctionnel, soit dans l'adhésif, soit avant greffage au polymère, est un composé de formule : 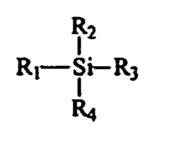 où R₁ est choisi parmi un groupe alcène en C₂ à C₆, amino-(alkyle en C₁ à C₆), uréido(alkyle en C₁ à C₆), méthylacryl-oxy(alkyle en C₁ à C₆) et glycidoxy(alkyle en C₁ à C₆),
R₂, R₃ et R₄ sont choisis indépendamment parmi R₁, les groupes alkyle en C₁ à C₆, aryle en C₆ à C₁₂, les halogènes, les groupes de formule N(R₅)(R₆), -OR₅ et R₅CO₂-, -O(CH₂)ₙOR₅, l'un au moins de R₂, R₃ et R₄ étant un groupe ayant la formule -OR₅, -O₂CR₅ ou -O(CH₂)ₙOR₅, où n est 1 à 10, et R₅ et R₆, s'ils sont présents, sont indépendamment des hydrocarbures en C₁ à C₆.

7. Structure stratifiée selon la revendication 6, dans laquelle R₁ est un groupe alcène terminal en C₂ à C₆.

8. Structure stratifiée selon la revendication 7, dans laquelle R₁ est -CH=CH₂.

9. Structure stratifiée selon l'une quelconque des revendications 6 à 8, dans laquelle R₂, R₃ et R₄ sont choisis chacun indépendamment parmi les groupes ayant la formule -OR₅, R₅CO₂- ou -O(CH₂)ₙOR₅, où n est 1 à 10 et R₅ est un alcane en C₁ à C₆.

10. Structure stratifiée selon l'une quelconque des revendications 6 à 9, dans laquelle R₂ à R₄ sont chacun indépendamment -OCH₃ ou -OC₂H₅.

11. Structure stratifiée selon l'une quelconque des revendications précédentes, dans laquelle le composé siloxy organofonctionnel, soit dans l'adhésif, soit avant greffage au polymère, est choisi parmi

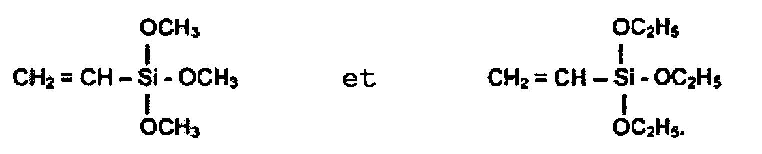

12. Structure stratifiée selon l'une quelconque des revendications précédentes, dans laquelle la première couche comprend de l'aluminium ou un alliage de celui-ci.

13. Structure stratifiée selon l'une quelconque des revendications précédentes, dans laquelle la première couche comprend une feuille d'aluminium.

14. Structure stratifiée selon l'une quelconque des revendications précédentes, dans laquelle la première couche comprend un film plastique métallisé.

15. Structure stratifiée selon l'une quelconque des revendications précédentes, dans laquelle la mousse comprend du polyuréthanne, du polyisocyanurate, des polymères phénoliques, du polystyrène ou des mélanges/copolymères de ceux-ci.

16. Structure stratifiée selon l'une quelconque des revendications précédentes, comprenant de plus :
c) une troisième couche, qui comprend un matériau flexible,
dans laquelle la troisième couche est placée en position adjacente à la deuxième couche sur une face opposée à la première couche, et dans laquelle un adhésif comprenant un composé siloxy organofonctionnel est disposé entre les deuxième et troisième couches.

17. Structure stratifiée selon la revendication 16, dans laquelle la troisième couche comprend un métal ou un composé métallique.

18. Structure stratifiée selon l'une quelconque des revendications précédentes, dans laquelle du papier ou des fibres de verre sont disposés entre les première et deuxième couches et, facultativement, si la troisième couche est présente, entre les deuxième et troisième couches.

19. Structure stratifiée selon l'une quelconque des revendications précédentes, la structure comprenant les couches suivantes dans l'ordre indiqué :
une première couche comprenant de l'aluminium ou de l'acier ;
une première couche fibreuse comprenant du papier et/ou des fibres de verre ;
une deuxième couche, qui comprend un matériau isolant comprenant une mousse ou une laine minérale ;
une deuxième couche fibreuse comprenant du papier et/ou des fibres de verre ;
une troisième couche comprenant de l'aluminium ou de l'acier,
dans laquelle un adhésif comprenant un composé siloxy organofonctionnel, facultativement greffé à un polymère, est disposé sur une partie au moins d'une face de chacune des première et troisième couches, ladite face de chacune des première et troisième couches étant une face de la première ou troisième couche la plus proche de la deuxième couche.

20. Structure stratifiée, dans laquelle la structure comprend une pluralité de structures en couches telles que définies dans la revendication 1 ou 2.

21. Procédé pour fabriquer la structure stratifiée de la revendication 1, le procédé comprenant les étapes suivantes :
(i) fournir une première couche comprenant un matériau flexible, dans laquelle un adhésif comprenant un composé siloxy organofonctionnel est disposé sur au moins une partie d'une face de la première couche ;
(ii) fournir un matériau précurseur d'un matériau thermiquement isolant ;
(iii) disposer sur la première couche, sur la même face que l'adhésif, le matériau précurseur ; et
(iv) transformer le matériau précurseur en une couche de matériau thermiquement isolant pour former la structure stratifiée.

22. Procédé selon la revendication 21, dans lequel le matériau isolant comprend une mousse et le précurseur est un précurseur de mousse.

23. Procédé selon la revendication 21 ou la revendication 22, consistant de plus à
placer, à une distance fixe de la première couche et avant la formation du matériau isolant, une troisième couche comprenant un matériau flexible et sur laquelle est disposé un second adhésif en sorte que, pendant la formation de la couche de matériau isolant, le matériau précurseur s'expanse en entrant en contact avec la troisième couche et/ou le second adhésif disposé sur celle-ci, pour former la structure stratifiée comprenant
des première et troisième couches séparées approximativement de la distance fixe, chacune des première et troisième couches comprenant un matériau flexible, et
une deuxième couche, qui comprend un matériau isolant, disposée entre les première et troisième couches et adhérant à celles-ci.

24. Procédé selon l'une quelconque des revendications 21 à 22, consistant de plus à
fournir une troisième couche ayant un second adhésif disposé sur une de ses faces, la troisième couche comprenant un matériau flexible ;
mettre en contact, après l'étape (iii) de la revendication 21, une face de la troisième couche portant le second adhésif avec le précurseur ;
transformer le matériau précurseur en la couche de matériau isolant pour former la structure stratifiée comprenant
des première et troisième couches, chacune des première et troisième couches comprenant un matériau flexible, et
une deuxième couche, qui comprend un matériau isolant, disposée entre les première et troisième couches et adhérant à celles-ci.

25. Procédé selon l'une quelconque des revendications 21 à 24, dans lequel le matériau flexible de la première couche et/ou de la troisième couche comprend un métal ou un composé métallique.

26. Procédé selon l'une quelconque des revendications 21 à 25, dans lequel le composé siloxy organofonctionnel a été greffé à un polymère.
